# EUROPÄISCHE PATENTSCHRIFT

(11) **EP 4 063 903 B1**
(45) Veröffentlichungstag und Bekanntmachung des Hinweises auf die Patenterteilung: **07.06.2023**
(21) Anmeldenummer: 22156588.0
(22) Anmeldetag: 14.02.2022
(51) Int. Cl.: G01S 7/481, G01S 7/497, G01S 17/42, G01S 17/89, G01S 17/10

(54) **OPTISCHE ABSTANDSMESSUNG MIT EINEM LICHTLAUFZEITVERFAHREN**
OPTICAL DISTANCE MEASUREMENT USING A LIGHT TRAVEL TIME METHOD
MESURE OPTIQUE DE DISTANCE SELON UN PROCÉDÉ DE TEMPS DE PROPAGATION DE LA LUMIÈRE

(30) Priorität: 23.03.2021 DE 102021107193
(43) Veröffentlichungstag der Anmeldung: 28.09.2022
(73) Patentinhaber: SICK AG, 79183 Waldkirch (DE)
(72) Erfinder: Baldischweiler, Boris, 79194 Gundelfingen (DE); Ringwald, Siegfried, 79215 Elzach (DE)

(56) Entgegenhaltungen:
- WO-A1-2017/082830
- DE-A1-102018 209 844
- DE-B3-102018 124 835

## Beschreibung

Die Erfindung betrifft einen abstandsmessenden optoelektronischen Sensor und ein Verfahren zur optischen Abstandsmessung nach dem Oberbegriff von Anspruch 1 beziehungsweise 12.

Optische Abtastung wird schon lange in Laserscannern eingesetzt. Dabei überstreicht ein von einem Laser erzeugter Lichtstrahl mit Hilfe einer Ablenkeinheit periodisch den Überwachungsbereich und misst jeweils mit einem Lichtlaufzeitverfahren den Abstand zum angetasteten Objekt. In einem Pulsverfahren werden dafür Lichtpulse ausgesandt, und es wird die Dauer zwischen Sende- und Empfangszeitpunkt gemessen. In einem Phasenverfahren erfolgt eine periodische Amplitudenmodulation und Messung des Phasenversatzes zwischen Sende- und Empfangslicht. Neben der gemessenen Abstandinformation wird die Winkellage der Ablenkeinheit und damit des Objektes bestimmt, und so entstehen nach einer Abtastperiode Messpunkte mit Abstands- und Winkelwerten in Polarkoordinaten. Durch zusätzliche Variation oder Mehrstrahlabtastung im Elevationswinkel werden dreidimensionale Messpunkte aus einem Raumbereich erzeugt. Die Abtastung erfordert zwar besonders im Falle der 3D-Erfassung gegenüber Kameras eine gewisse Messzeit, aber dafür konzentriert sich die Messung auf einen Punkt und gewinnt dadurch Reichweite und verlässlichere Messwerte. Abstandsmessende Sensoren nach diesem Prinzip werden auch LiDAR-Sensoren (Light Detection and Ranging) genannt. In den meisten Laserscannern wird die Abtastbewegung durch einen Drehspiegel oder ein Spiegelrad mit mehreren Facetten erreicht. Es ist auch bekannt, stattdessen den gesamten Messkopf mit einem oder mehreren Lichtsendern und Lichtempfängern rotieren zu lassen, wie dies beispielsweise in DE 197 57 849 B4 beschrieben ist. In wieder anderen Systemen wird eine Ablenkeinheit hin- und herverschwenkt. Jegliche mechanische Bewegung führt jedoch zu einer gewissen Baugröße und Stoßempfindlichkeit sowie zu Wartungsanfälligkeit infolge von Verschleiß.

Um dies zu vermeiden, gibt es im Stand der Technik Bestrebungen, sogenannte Solid-State-Scanner aufzubauen, also scannende Systeme ohne rotierende Ablenkeinheit oder vergleichbare bewegte mechanische Teile. Beispielsweise wird in der EP 2 708 914 A1 der gepulste Sendelichtstrahl einer Lichtquelle mit einem MEMS-Spiegel (Micro Electro Mechanical System) in X-Richtung und Y-Richtung über die abzutastende Fläche geführt. Die reflektierten Lichtpulse werden von einem Bildsensor mit zahlreichen Pixeln empfangen, von der jeweils nur diejenigen aktiviert werden, die einen aktuell von dem Sendelichtstrahl beleuchteten Bereich beobachten. Eine weitere Besonderheit in der EP 2 708 914 A1 ist die Verwendung von SPADs (Single-Photon Avalanche Diode) für die Pixel des Bildsensors. SPADs sind Lawinenphotodioden, die im sogenannten Geiger-Modus betrieben werden. Sie werden dazu oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. SPADs sind nicht nur hochempfindlich, sondern zugleich auch hochintegrierbar.

Ein MEMS-Spiegel ist nur eine von mehreren Möglichkeiten, eine Strahlablenkung ohne bewegte mechanische Teile zu verwirklichen. Gemeinsam ist diesen Strahlablenkungen, dass sie allenfalls auf mikromechanischer Ebene eine Bewegung erzeugen, wie im Falle von Mikrospiegeln, und jeweils beispielsweise durch Anlegen einer elektrischen Spannung ihre optischen Eigenschaften verändern, um den Ablenkwinkel einzustellen. Einen Motor oder mechanisch bewegte Teile wie einen Drehspiegel, ein Polygonspiegelrad oder einen Schwenkmechanismus gibt es nicht.

Bei einer Lichtlaufzeitmessung ist in den realen Messwerten die Laufzeit des reinen Lichtwegs zwischen Sensor und Objekt von verschiedenen elektronischen und optischen Verzögerungen überlagert. Diese können sich von Empfangskanal zu Empfangskanal unterscheiden, und es sind wenigstens teilweise dynamische Drifteffekte aufgrund von Alterung, Temperatur und sonstigen Umgebungsbedingungen. Eine bekannte Kompensationsmaßnahme ist eine optische Referenzmessung. Die DE 10 2017 101 501 B3 beispielsweise bestimmt die Lichtlaufzeit als Differenz der Ergebnisse einer Lichtlaufzeitmessung und einer Referenzzeitmessung. Für die Referenzzeitmessung ist ein dediziertes Referenzempfangselement vorgesehen.

In der DE 10 2018 124 835 B3 wird ein optoelektronischer Sensor vorgestellt, der mit einem Referenzziel in bestimmten, vorzugsweise außerhalb des Sichtfeld liegenden Ablenkwinkeln zumindest einen Teil des abgelenkten Sendelichtstrahls auf den Lichtempfänger zurückführt und mit diesem Referenzsignal prüft, ob die Ablenkung noch funktioniert. Das Referenzsignal wird nicht dafür genutzt, die Lichtlaufzeitmessung zu korrigieren und könnte das auch nicht, weil das Referenzsignal nur in bestimmten Ablenkwinkeln zur Verfügung steht, nämlich solchen, in denen gerade kein eigentlicher Messwert gewonnen wird. In einer anderen Ausführungsform wird durch teilreflektierende Strukturen dem Messsignal zusätzlich ein Referenzsignal aufgeprägt. Diese Pixel werden je nach Ausführungsform zugunsten des Funktionstests der Ablenkung als tote Pixel hingenommen, das Referenzsignal wird anhand der Erwartung, dass es zuerst erfasst wird, in der Auswertung separiert, oder das Referenzsignal wird durch Scharmittelung mehrerer Messungen zurückgewonnen. Sofern mit den Pixeln überhaupt noch gemessen werden kann, wird diese Messung jedenfalls nicht anhand der Referenzmessung korrigiert. Das ist nicht nur in DE 10 2018 124 835 B3 nicht vorgehen, in der nur die Ablenkung geprüft wird. Dazu müsste das Pixel in Doppelfunktion sich selbst referenzieren, was wegen einander überlagernder Signale schwierig und bei SPADs ganz unmöglich ist, die sich dann nach dem Referenzereignis für die eigentliche Messung in ihrer Totzeit befinden.

Die DE 10 2018 212 529 A1 offenbart ein Verfahren und Steuergerät zum Regeln einer emittierten Lichtleistung einer Lichtquelle eines optischen Sensorsystems. Dabei wird zwar kurz ein LiDAR erwähnt, nicht aber dessen Lichtlaufzeitmessung oder gar eine Referenzmessung zur Kompensation von Driften. Außerdem wird zur Bewertung der emittierten Lichtleistung ein eigenes Sensorelement eingesetzt.

Aus der DE 10 2018 209 844 A1 ist eine Abstandsmesseinheit zur signallaufzeitbasierten Messung eines Abstands bekannt, die Pulse mit einer Laserquelle über einen schwingenden Spiegel oder MEMS-Spiegel in verschiedene Raumwinkelsegmente aussendet. Der zugehörige Echopuls wird auf einer Sensorfläche als Laufzeitsignal registriert. Die Sendeoptik koppelt zudem einen Referenzpuls aus, der innerhalb des Gehäuses auf die Sensorfläche geführt wird und ein Referenzsignal erzeugt. Aus den beiden Signalen wird die Laufzeit ermittelt.

Die WO 2017/082830 A1 offenbart ein optisches Entfernungsmesssystem, das einen Teil des Sendelichts direkt auf mindestens einen Referenzpixel auskoppelt.

Es ist daher Aufgabe der Erfindung, die Referenzmessung eines optoelektronischen Sensors mit Lichtlaufzeitmessung zu verbessern.

Diese Aufgabe wird durch einen abstandsmessenden optoelektronischen Sensor zur Erfassung von Objekten in einem Erfassungsbereich und ein Verfahren zur optischen Abstandsmessung nach Anspruch 1 beziehungsweise 12 gelöst. Es wird ein Sendelichtbündel ausgesandt und das von den Objekten remittierte Sendelichtbündel wieder empfangen. Um den Erfassungsbereich abzutasten, lenkt eine Ablenkeinheit das Sendelichtbündel in unterschiedliche Ablenkwinkel. Die Abtastung folgt einem zunächst beliebigen Muster und kann dabei gleichmäßig sein, aber auch bestimmte Teilbereiche (ROI, Region of Interest) häufiger und andere gar nicht betreffen. Ein Lichtempfänger umfasst mindestens zwei Lichtempfangselemente, von denen eines ein Messsignal aus dem remittierten Sendelichtbündel und das andere ein Referenzsignal aus einem internen Referenzlichtbündel erzeugt, das intern innerhalb des Sensors aus dem Sendelichtbündel beispielsweise durch Umlenken eines Teilquerschnitts oder eine Teilreflexion abgeleitet ist.

Eine Steuer- und Auswertungseinheit wertet das Messsignal und das Referenzsignal aus und bestimmt eine Lichtlaufzeit des ausgesandten und wieder empfangenen Sendelichtbündels, aus dem anhand der Lichtgeschwindigkeit ein Messwert für den Abstand des angetasteten Objekts gewonnen werden kann. Vorzugsweise wird die aus dem Messsignal bestimmte Lichtlaufzeit mit dem Referenzsignal korrigiert, indem beispielsweise das Referenzsignal einen Zeitnullpunkt bildet, der die Lichtlaufzeitmessung startet oder aus dem in der Auswertung ein Startzeitpunkt bestimmt wird. Das Referenzsignal kann auf diese Weise dynamische Driften korrigieren, da sie Messsignal und Referenzsignal gleichermaßen betreffen. Ein konstanter Versatz, wie beispielsweise ein optischer Laufweg des Referenzlichtbündels, ist bei einer Lichtlaufzeitmessung unproblematisch und durch Kalibrierung oder rechnerische Kompensation ausgleichbar.

Die Erfindung geht von dem Grundgedanken aus, dass die Lichtempfangselemente in wechselnden Rollen füreinander als Referenzempfangselemente dienen. Je nach Ablenkwinkel fungiert deshalb ein Lichtempfangselement mal als Messempfangselement zum Erzeugen des Messsignals und mal als Referenzempfangselement zum Erzeugen des Referenzsignals. Diese funktionale Zuordnung trifft die Steuer- und Auswertungseinheit, indem sie das Empfangssignal des jeweiligen Lichtempfangselements ausliest und als Messsignal oder Referenzsignal behandelt. Im Stand der Technik hingegen sind diese Rollen fixiert, es gibt dedizierte Messempfangselemente und dedizierte Referenzempfangselemente, beispielsweise wäre das erste Lichtempfangselement immer das Messempfangselement und das zweite Lichtempfangselement immer das Referenzempfangselement. Die Erfindung kennt diese feste Zuordnung nicht, mindestens ein Lichtempfangselement erzeugt in einem Ablenkwinkel das Messsignal und in einem anderen Ablenkwinkel das Referenzsignal, und vorzugsweise gilt dieser dynamische Rollentausch für beide oder alle Lichtempfangselemente.

In einer oben diskutierten Ausführungsform der DE 10 2018 124 835 B3 empfängt dasselbe Pixel sowohl den remittierten Sendelichtstrahl als auch das Referenzlicht. Abgesehen davon, dass die DE 10 2018 124 835 B3 dies nicht für eine Kompensation der Lichtlaufzeitmessung nutzt, wäre dies eine Doppelfunktion desselben Pixels und kein erfindungsgemäßes, dynamisch wechselndes Referenzieren füreinander.

Die Erfindung hat den Vorteil, dass durch die Referenzmessung wesentlich robustere und genauerer Abstandswerte gewonnen werden können. Dazu sind keine zusätzlichen elektronischen Komponenten erforderlich, da die vorhandenen Lichtempfangselemente die Referenzmessung zusätzlich leisten. Mit den dynamisch tauschenden Rollen sind eigentliche Messung und Referenzmessung entkoppelt. Sie können wie von dedizierten Referenzmessungen gewohnt ausgewertet werden, und sie beeinträchtigen einander nicht gegenseitig.

Die Steuer- und Auswertungseinheit ist bevorzugt dafür ausgebildet, mit Hilfe der Ablenkeinheit periodisch eine Zeile und/oder ein zweidimensionales Muster abzutasten. Bei Abtastung einer Zeile ist der Sensor ein Zeilenscanner, der eine Ebene oder einen Ausschnitt einer Ebene abtastet. Mit einem zweidimensionalen Muster wird eine flächige und damit umfassendere Abtastung ermöglicht. Das zweidimensionale Muster kann natürlich künstlich auf eine Zeile begrenzt werden, dann entsteht trotzdem ein Zeilenscanner. Ein typisches Muster sieht vor, nacheinander leicht versetzte Zeilen beziehungsweise Spalten und damit systematisch eine Fläche abzutasten. Prinzipiell ist aber jegliches periodische und nicht periodische Muster vorstellbar, das beispielsweise bestimmte Teilbereiche öfter abtastet als andere, bis hin zu einem Zufallsmuster.

Die Ablenkung erfolgt bevorzugt ohne Bewegung von mechanischen Teilen, allenfalls von mikromechanischen Teilen. Der Sensor ist damit ein Solid-State-Scanner oder -Sensor. Besonders bevorzugt weist die Ablenkeinheit einen MEMS-Spiegel, ein schaltbares Flüssigkristallelement, ein Optical Phased Array, einen akusto-optischen Modulator, einen elektro-optischen Modulator oder eine kippbare Flüssiglinse auf. Alternativ ist ein herkömmlicher Schwing- oder Drehspiegel beziehungsweise entsprechend bewegter Messkopf vorstellbar. Eine Ablenkung in zwei Richtungen kann sich aus zwei Solid-State-Ablenkungen oder aus einem Hybrid aus makroskopischer Ablenkeinheit und Solid-State-Ablenkeinheit zusammensetzen.

Der Lichtempfänger weist bevorzugt eine Vielzahl von Lichtempfangselementen auf, insbesondere SPADs, die jeweils unterschiedlichen Ablenkwinkeln zugeordnet sind. Empfangsseitig ist demnach kein eigentliches Scanprinzip eingesetzt, sondern es wird der gesamte Erfassungsbereich zugleich erfasst, in dem jeweils nur ein bestimmter Bereich von dem Sendelichtbündel beleuchtet wird. Die Lichtempfangselemente sind vorzugsweise SPADs mit den einleitend genannten Vorteilen einer besonders hohen Empfindlichkeit und Integrationsfähigkeit. Die Lichtempfangselemente bilden insbesondere eine Pixelzeile oder Pixelmatrix, wobei jedes Pixel ein eigenes Lichtempfangselement sein kann oder Pixelbereiche gruppenweise zu einer Art Makropixel zusammengefasst sein können, die dann gemeinsam eines der Lichtempfangselemente bilden. Hierbei wiederum ist sowohl eine fixe als auch dynamische Gruppenzugehörigkeit denkbar. Für jeden Ablenkwinkel ist mindestens ein Lichtempfangselement als Messempfangselement und mindestens ein anderes Lichtempfangselement als Referenzempfangselement zuständig.

Das mindestens eine Lichtempfangselement, das als Messempfangselement fungiert, wechselt vorzugsweise mit jedem Ablenkwinkel. Es gibt demnach eine Zuordnung von Lichtempfangselementen zu Ablenkwinkeln hinsichtlich der Funktion als Messempfangselement. Die Ablenkwinkel sind hier diskretisiert mit einer Körnung entsprechend der Winkelauflösung der Abtastung des Erfassungsbereichs zu verstehen. Eineindeutig ist diese Zuordnung nur vorzugsweise. Einerseits kann es auch noch die Möglichkeit geben, dass eine Gruppe von Lichtempfangselementen für denselben Ablenkwinkel zuständig ist, vergleiche die oben erwähnten Makropixel. Andererseits darf es vorzugsweise auch Lichtempfangselemente geben, die keinem Ablenkwinkel zugeordnet sind und die nie als Messempfangselemente fungieren, etwa abgedeckte Referenzpixel für die Bestimmung von Dunkelrauschen oder Randpixel für eine Erfassung der allgemeinen Umgebungslichtbedingungen.

Als Referenzempfangselement fungiert entsprechend der erfindungsgemäßen dynamischen Rollenzuweisung jeweils ein Lichtempfangselement, das in diesem Ablenkwinkel nicht als Messempfangselement eingesetzt ist. Das Referenzempfangselement kann ebenfalls mit jedem Ablenkwinkel wechseln. In einer bevorzugten Ausführungsform ist damit jedes Lichtempfangselement in einem Ablenkwinkel als Messempfangselement und in einem anderen Ablenkwinkel als Referenzempfangselement eingesetzt. Das muss aber so nicht sein, die Zuordnung als Referenzempfangselement ist freier. Das Muster der als Referenzempfangselement fungierenden Lichtempfangselemente in Abhängigkeit von dem Ablenkwinkel kann fast beliebig unregelmäßig sein. Für die Referenzmessung ist der Ablenkwinkel weitgehend belanglos, solange nur das mindestens eine für diesen Ablenkwinkel als Messempfangselement zuständige Lichtempfangselement aus der Referenzmessung herausgehalten wird. Das mindestens eine als Referenzempfangselement fungierende Lichtempfangselement muss keine besondere räumliche Beziehung zu dem jeweiligen mindestens einen als Messempfangselement fungierenden Lichtempfangselement haben, beispielsweise als dessen Nachbarpixel. Im Gegenteil ist ein gewisser Abstand zur Vermeidung von optischen Übersprechen sogar vorteilhaft. So ist beispielsweise denkbar, dass ein Lichtempfangselement als Referenzempfangselement für mehrere unterschiedliche Ablenkwinkel eingesetzt und/oder eine Gruppe von Lichtempfangselementen oder sogar eine Gruppe von Makropixeln von Lichtempfangselementen für denselben Ablenkwinkel zuständig ist. Die Gruppe kann dann in gleicher Zusammensetzung, in anderer Teilzusammensetzung oder als ganz andere Gruppe das Referenzempfangselement für einen anderen Ablenkwinkel bilden. Die Konsequenz aus dieser weniger geordneten Zuordnung ist, dass es Lichtempfangselemente geben kann, die zwar als Messempfangselement für einen Ablenkwinkel zuständig sind, jedoch als Referenzempfangselement für keinen Ablenkwinkel und damit überhaupt nicht eingesetzt sind.

Die Steuer- und Auswertungseinheit ist bevorzugt dafür ausgebildet, jeweils nur diejenigen Lichtempfangselemente zu aktivieren oder auszulesen, die dem jeweiligen aktuellen Ablenkwinkel entsprechen. Damit wird auch empfangsseitig eine Art Scanprinzip verwirklicht. Durch die selektive Aktivierung oder das selektive Auslesen werden keine Empfangssignale von Lichtempfangselementen erzeugt oder ausgewertet, die beim aktuellen Ablenkwinkel des Sendelichtbündels zum Messsignal oder dem Referenzsignal gar nicht beitragen können. Wegen der dynamischen Rollenzuweisung von Lichtempfangselementen als Messempfangselement oder Referenzempfangselement entsteht eine Art doppelte Abtastung. Die jeweils aktivierten Lichtempfangselemente können als Aktivitätsspot aufgefasst werden. Ein erster solcher Aktivitätsspot der Messempfangselemente bewegt sich auf dem Lichtempfänger entsprechend der Ablenkung des Sendelichtbündels und damit typischerweise regelmäßig beispielsweise zyklisch über eine Zeile oder zeilenweise über eine Matrix. Ein zweiter Aktivitätsspot bewegt sich entsprechend den jeweils zugehörigen Referenzempfangselementen. Diese Bewegung kann ebenso regelmäßig sein, beispielsweise mit einem gewissen Versatz. Wie schon ausgeführt, ist aber die Zuordnung der Referenzempfangselemente geometrisch weitgehend frei. Das hängt nur davon ab, wie das jeweilige Referenzlichtbündel entsteht, und unterliegt großen Gestaltungsspielräumen. Somit kann sich der Aktivitätsspot der Referenzempfangselemente je nach Ausführungsform unregelmäßig bewegen, ein- oder vielfach springen, bisweilen für mehrere Ablenkwinkel am selben Ort verharren, sich vergrößern oder verkleinern, sich aufteilen und wieder zusammengeführt werden und dergleichen mehr.

SPADs als Lichtempfangselemente können bevorzugt dadurch inaktiv geschaltet werden, dass die Vorspannung unterdie Durchbruchspannung abgesenkt wird. Sie verlieren dann um mehrere Größenordnungen an Empfindlichkeit und können deshalb als ausgeschaltet angesehen werden. Das Inaktivschalten hat auch den Vorteil, dass keine unnötigen Lawinen ausgelöst werden, die nur Stromaufnahme und Wärmeentwicklung beitragen. Es ist aber auch unabhängig von der Technik möglich, die nicht benötigten Lichtempfangselemente aktiv zu lassen und lediglich deren Empfangssignal nicht auszulesen oder in der Auswertung nicht zu beachten. Statt auf Ebene des Lichtempfängers kann zuvor optisch dafür gesorgt werden, dass die nicht benötigten Lichtempfangselemente kein Licht empfangen, etwa mit einem elektro-optischen Shutter. Dunkelrauschen wird so aber nicht eliminiert, und gerade bei SPADs kann dies einen erheblichen Anteil haben.

Der Sensor weist zur Erzeugung des Referenzlichtbündels ein optisches Referenzauskopplungselement im Strahlengang des Sendelichtbündels auf. Damit wird ein Teil des bereits abgelenkten Sendelichtbündels oder einer Teilauskopplung davon intern, d.h. innerhalb des Sensors, als das Referenzlichtbündel auf mindestens ein Lichtempfangselement zurückgeführt. Das von dem Referenzlichtbündel getroffene mindestens eine Lichtempfangselement fungiert für den jeweiligen Ablenkwinkel des Sendelichtbündels, von dem das Referenzlichtbündel erzeugt wird, als Referenzempfangselement. Es ist denkbar, dass das Referenzlichtbündel zusätzliche Lichtempfangselemente trifft, die in der Auswertung ignoriert werden, aber angestrebt ist vorzugsweise eine möglichst gezielte Referenzumlenkung. Der optische Effekt für die Auskopplung des Referenzlichtbündels soll hier zunächst nicht eingeschränkt sein und beispielsweise eine Lichtumlenkung oder eine Reflexion beziehungsweise Teilreflexion einschließen. Als Lichtumlenkung ist beispielsweise ein Prisma, eine Lichtleiterschleife oder dergleichen denkbar, die einen Teil des Sendelichtbündels in eine andere Richtung führt, nämlich zum Lichtempfänger hin. Ein mindestens teilreflektierendes Referenzauskopplungselement wirft einen Teil des Sendelichtbündels direkt oder indirekt auf den Lichtempfänger zurück. Durch geometrische Gestaltung, insbesondere Krümmung, oder eine Vielzahl von Unterelementen ist das Referenzauskopplungselement in der Lage, das Referenzlichtbündel in den verschiedenen Ablenkwinkel jeweils auf mindestens ein anderes Lichtempfangselement zu lenken als das in diesem Ablenkwinkel als Messempfangselement fungierende mindestens eine Lichtempfangselement. Somit sorgt das Referenzauskopplungselement dafür, dass in jedem Ablenkwinkel ein geeignetes Referenzempfangselement zur Verfügung steht.

Das optische Referenzauskopplungselement ist bevorzugt an einer Frontscheibe des Sensors angeordnet oder in die Frontscheibe integriert. Die Frontscheibe umfasst bestimmungsgemäß sämtliche relevanten Ablenkwinkel, so dass dort eine Auskopplung des Referenzlichtbündels für alle Ablenkwinkel des abgelenkten Sendelichtbündels möglich ist. Zudem gibt dies der Frontscheibe eine platz- und kostensparende Doppelfunktion. Insbesondere ein Frontscheibenreflex entsteht ohnehin, üblicherweise als Störeffekt, und dieser kann erfindungsgemäß sinnvoll genutzt werden. Besonders bevorzugt ist das Referenzauskopplungselement in die Frontscheibe integriert, etwa als Beschichtung oder Strukturierung.

Das Referenzauskopplungselement weist in einer erfindungsgemäßen Ausführung in einem Querschnitt die Form mindestens zweier zueinander verschobener, insbesondere ineinandergeschobener Kreisabschnitte auf. Diese Form des Referenzauskopplungselements ist besonders bevorzugt mit der Anordnung an oder Integration in die Frontscheibe kombiniert. Vorzugsweise sind es zwei Kreisabschnitte oder Kreissegmente über einen gleichen Winkelbereich mit gleichem Radius. Die Mittelpunkte der Kreisabschnitte sind lateral auseinandergeschoben, d.h. in Querrichtung zur Verbindungslinie von dem Lichtsender zu dem Referenzauskopplungselement. Es werden dann vorzugsweise die inneren Kreisabschnitte verwendet, die sich in spitzem Winkel treffen, dies wird als Ineinanderschieben bezeichnet. Die Entstehung lässt sich nochmals anders so beschreiben, dass ein Kreis auf dem Durchmesser geteilt wird, der längs der genannten Verbindungslinie verläuft. Dann werden die beiden Hälften aufeinander zu geschoben, und die im oberen Bereich entstehende Kontur wird der Form des Referenzauskopplungselements zugrunde gelegt. Eine asymmetrische Variante teilt im ersten Schritt den Kreis auf einer Sekante parallel zum Durchmesser und/oder schräg auf. Ein kreisförmiges Referenzauskopplungselement würde das Referenzlichtbündel gerade dasjenige Lichtempfangselement treffen lassen, das in diesem Ablenkwinkel als Messempfangselement fungiert. Durch das Verschieben der Mittelpunkte oder vorzugsweise Ineinanderschieben wird diese nicht gewollte Beziehung vorteilhaft aufgebrochen. Mit nur einem einzigen schräg gestellten Kreisabschnitt, dessen Mittelpunkt gegenüber dem Lichtsender lateral versetzt ist, würde mindestens in den Randbereichen der Lichtempfänger von dem Referenzlichtbündel ganz verfehlt. Die diskutierte Form des Referenzauskopplungselements ist für eine Variation des Ablenkwinkels in nur einer Richtung gedacht. In einer Höhenrichtung senkrecht dazu ist die Form vorzugsweise flach, das Referenzauskopplungselement demnach aus Zylinder- oder Kegelabschnitten geformt. Eine komplexere Kontur in Höhenrichtung ist denkbar, aber nicht mehr erforderlich, da das Referenzlichtbündel bereits in der Ebene der Kreissegmente auf ein passendes Lichtempfangselement geführt wird.

Das Referenzauskopplungselement weist in einer weiteren erfindungsgemäßen Ausführung eine Vielzahl von Mikrospiegeln oder Mikroprismen auf. Dadurch wird ein Frontscheibenreflex erzeugt und/oder umgelenkt, der je nach Ablenkwinkel bestimmte Lichtempfangselemente trifft, für die in diesem Ablenkwinkel das Sendelichtbündel im Erfassungsbereich außerhalb des Sichtfeldes liegt, die also in diesem Ablenkwinkel als Messempfangselement nicht gebraucht werden und als Referenzempfangselement dienen können. Die Mikrospiegel oder Mikroprismen können als Mikrostruktur auf die Frontscheibe aufgebracht werden, oder die Frontscheibe wird mit dieser Mikrostruktur hergestellt. Ebenso ist ein separates Referenzauskopplungselement denkbar. Im letzteren Fall wird das Referenzauskopplungselement vorzugsweise so angeordnet, dass es von dem remittierten Sendelichtbündel nicht getroffen wird. Beispielsweise sind dafür Lichtsender und Lichtempfänger übereinander angeordnet. Das Referenzauskopplungselement befindet sich dann auf einer relativen Höhe im Strahlengang eines Frontscheibenreflexes, die außerhalb des Strahlengangs von Sendelichtbündel und remittiertem Sendelichtbündel liegt.

Der Sensor weist bevorzugt eine empfangsseitige Blendenanordnung mit jeweils einer Blende pro Ablenkwinkel auf. Sofern ein separates Referenzauskopplungselement mit einer Vielzahl von Mikrospiegeln oder Mikroprismen verwendet wird, ist die Blendenanordnung diesem vorzugsweise nachgeordnet. Dadurch wird Fremdlicht in dem Referenzlichtbündel wirksam unterdrückt. Eine entsprechende Blendenanordnung ist aber auch für andere Ausführungsformen sinnvoll, die dann geeignet im Strahlengang vor dem Lichtempfänger angeordnet wird.

Die Steuer- und Auswertungseinheit ist bevorzugt dafür ausgebildet, aus dem Referenzsignal den Ablenkwinkel zu messen oder zu überprüfen. In den verschiedenen Ablenkwinkeln wird mindestens ein bestimmtes Lichtempfangselement von dem Referenzlichtbündel getroffen. Somit lässt sich aus dem Lichtempfangselement, das ein Referenzsignal erzeugt, auf den Ablenkwinkel rückschließen. Damit lässt sich beispielsweise die Ablenkeinheit regeln, die Auswahl der jeweiligen Messempfangselemente und/oder Referenzempfangselemente für die jeweiligen Ablenkwinkel treffen oder die Funktion der Ablenkeinheit und von deren Ansteuerung prüfen. Falls die Steuer- und Auswertungseinheit kein ausreichendes Vorwissen hat, welches Lichtempfangselement derzeit für den Empfang des Referenzsignals in Frage kommt, kann sie anhand der Empfangssignale das Lichtempfangselement finden, das von dem Referenzlichtbündel getroffen wird. Von dem Messsignal ist das Referenzsignal bei dieser Suche durch die kurze Lichtlaufzeit auf dem nur internen Lichtweg im Sensor unterscheidbar.

Die Steuer- und Auswertungseinheit ist bevorzugt dafür ausgebildet, anhand des Referenzsignals die Funktionsfähigkeit der Ablenkeinheit, die Ausgangsleistung des Lichtsenders und/oder eine Verschmutzung einer Frontscheibe zu prüfen. Im vorigen Absatz wurde bereits erläutert, wie eine ausgefallene oder nicht mehr korrekt arbeitende Ablenkeinheit erkannt wird, wenn das Referenzsignal nicht in dem erwarteten Lichtempfangselement erfasst wird. In diesem Fall kann aus Gründen der Augensicherheit der Lichtsender ausgeschaltet beziehungsweise die Fehlfunktion gemeldet werden. Die Erwartungshaltung ist beispielsweise durch anfängliches Einlernen auch quantifizierbar. Dadurch wird beispielsweise mit mindestens einer Schwelle prüfbar, ob die Ausgangsleistung des Lichtsenders noch in einem Toleranzbereich liegt. Abweichungen werden beispielsweise durch Alterung oder Fehlansteuerungen des Lichtsenders beziehungsweise Alterung und Verschmutzung insbesondere von optischem Referenzelement und Frontscheibe verursacht. Das Referenzsignal kann dabei durchaus unerwünscht stark und nicht nur geschwächt werden, wie etwa im Falle eines stärkeren Frontscheibenreflexes bei deren Verschmutzung. Die Messung einer Verschmutzung der Frontscheibe ist in sich eine nützliche Funktion, beispielsweise indem eine entsprechende Wartungsanforderung ausgegeben wird.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors mit Sendestrahlablenkung;
- Fig. 2: eine schematische Darstellung einer Erzeugung von individuell abgelenkten Referenzlichtstrahlen durch ein Referenzauskopplungselement;
- Fig. 3: eine schematische Darstellung einer Erzeugung von individuell abgelenkten Referenzlichtstrahlen ausschnitthaft für nur einen Referenzlichtstrahl;
- Fig. 4: eine schematische Darstellung einer Erzeugung von individuell abgelenkten Referenzlichtstrahlen mit einem Referenzauskopplungselement aus mehreren Spiegeln in variierender Schrägstellung;
- Fig. 5: eine schematische Darstellung einer Erzeugung von individuell abgelenkten Referenzlichtstrahlen mit einem Referenzauskopplungselement aus zwei ineinandergeschobenen Kreisabschnitten;
- Fig. 6: eine schematische Seitenansicht einer Erzeugung von individuell abgelenkten Referenzlichtstrahlen mit einem Filter zur Kanaltrennung;
- Fig. 7a-f: Darstellungen des Strahlenverlaufs von Referenzlichtstrahlen bei verschiedenen Ablenkwinkeln unter Verwendung eines Referenzauskopplungselements aus zwei ineinandergeschobenen Kreisabschnitten;
- Fig. 8a-f: Darstellungen des Strahlenverlaufs ähnlich den Figuren 7a-f nun als dreidimensionale Simulationsergebnisse;
- Fig. 9a-d: Darstellungen des Strahlenverlaufs von Referenzlichtstrahlen bei verschiedenen Ablenkwinkeln unter Verwendung eines Referenzauskopplungselements mit einer Vielzahl von Mikroprismen; und
- Fig. 10a-d: Darstellungen des Strahlenverlaufs ähnlich den Figuren 9a-d nun als dreidimensionale Simulationsergebnisse.

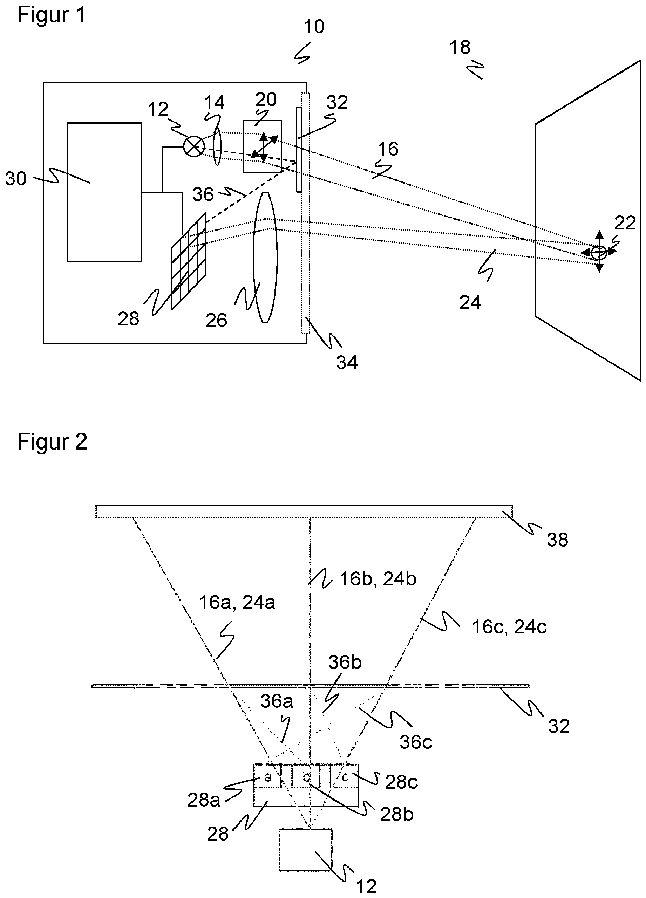

Figur 1 zeigt eine schematische Darstellung eines optoelektronischen Sensors 10 oder Solid-State-Scanners. Mit einem Lichtsender 12, der vorzugsweise eine lichtstarke LED oder Laserlichtquelle aufweist, wird durch eine Sendeoptik 14 ein Sendelichtstrahl 16 in einen Erfassungsbereich 18 ausgesandt. Mit Hilfe einer Ablenkeinheit 20 kann der Ablenkwinkel des Sendelichtstrahls 16 verändert und der Sendelichtstrahl 16 somit auf einen gewünschten variablen Messpunkt 22 ausgerichtet werden. Mit entsprechenden Abtastmustern wird dadurch nacheinander ein zeilenförmiger oder flächiger Erfassungsbereich 18 abgetastet, wobei ein nahezu beliebiges Abtastmuster denkbar ist.

Die Ablenkeinheit 20 ist nur schematisch dargestellt. Es gibt dafür verschiedenste Umsetzungsmöglichkeiten, nicht abschließende Beispiele sind ein MEMS-Spiegel, ein schaltbares Flüssigkristallelement, ein Optical Phased Array (OPA), das ähnlich wie in der Radartechnik durch Überlagerung vieler Einzelsender die Strahlkeule am Ausgang verschwenken kann, ein akusto-optischer Modulator, ein elektro-optische Modulator, eine Flüssiglinse, in der die Grenzschicht zwischen zwei nicht mischbaren Medien durch Ansteuerung einer Elektrodenanordnung verkippt werden kann, oder eine Piezo-Aktorik, die eine laterale Position der Sendeoptik 14 beziehungsweise, da es auf die relative Lage dazwischen ankommt, des Lichtsenders 12 verändert. In einer weiteren Ausführungsform wird als Lichtsender 12 eine Zeile oder Matrix mit einer Vielzahl von einzeln oder gruppenweise ansteuerbaren Einzellichtsendern verwendet, beispielsweise ein VCSEL-Array oder eine Anordnung mit anderen Lichtquellen, wie LEDs oder Kantenemitter-Laserdioden. Ein Sendelichtstrahl 16 in einem bestimmten Ablenkwinkel wird dann durch gezieltes Aktivieren bestimmter Einzellichtsender erzeugt. Jedenfalls kommt die Ablenkeinheit 20 in einem Solid-State-Scanner ohne makroskopische bewegliche Teile aus. Eine herkömmliche Mechanik in Form eines Drehspiegels oder eines beweglichen Messkopfes ist aber alternativ vorstellbar.

Treffen die Sendelichtstrahlen 16 nun in dem Erfassungsbereich 18 auf Objekte, so werden sie als remittierte Sendelichtstrahlen 24 zu dem Sensor 10 zurückgeworfen. Die remittierten Sendelichtstrahlen 24 gelangen durch eine Empfangsoptik 26 auf einen Lichtempfänger 28. Die Empfangsoptik 26 ist wie schon die Sendeoptik 14 nur durch eine einfache Linse repräsentiert, die stellvertretend für beliebige Optiken mit mehrlinsigen Objektiven, Blenden und sonstige optische Elemente steht. Auch eine reflexive oder diffraktive Optik ist vorstellbar. Auch der optische Grundaufbau mit biaxial nebeneinanderliegendem Lichtsender 12 und Lichtempfänger 28 ist nicht zwingend und durch jede an sich von einstrahligen optoelektronischen Sensoren bekannte Bauform ersetzbar. Ein Beispiel dafür ist eine koaxiale Anordnung mit oder ohne Strahlteiler.

Der Lichtempfänger 28 weist eine Vielzahl von Lichtempfangselementen auf und ist vorzugsweise als SPAD-Array ausgebildet. SPADs sind hochempfindlich und hochintegrierbar, und sie bieten die Möglichkeit, durch Absenken der Vorspannung unter die Durchbruchspannung praktisch inaktiv zu werden. Dadurch können jeweils nur solche SPADs aktiv geschaltet werden, die dem gewünschten Messpunkt 22 und damit dem erwarteten Auftreffort der remittierten Sendelichtstrahlen 24 entsprechen. Alternativ zu einem SPAD-Array ist eine Mehrfachanordnung von Photodioden oder APDs oder ein anderer Zeilen- oder Matrixempfänger beispielsweise in CCD- oder CMOS-Technik denkbar, bei dem dann gegebenenfalls nur bestimmte Pixel oder Pixelgruppen entsprechend gewünschten Messpunkten ausgelesen werden. Auf eine empfangsseitige Strahlablenkung kann verzichtet werden. Der Lichtempfänger 28 deckt den vollständigen Winkelbereich des gewünschten Sichtfeldes ab, aber jede Einzelmessung beschränkt sich vorteilhaft auf den Messpunkt 22 mit hoher Lichtleistung und geringem Fremdlichteintrag.

Eine Steuer- und Auswertungseinheit 30 ist mit dem Lichtsender 12 und dem Lichtempfänger 28 verbunden. Damit wird die Ablenkeinheit 20 angesteuert, um jeweils den Sendelichtstrahl 16 auf den gewünschten Messpunkt 22 zu richten. Die Empfangssignale vorzugsweise nur der tatsächlich von dem remittierten Sendelichtstrahl 24 beleuchteten Lichtempfangselemente oder SPADs werden ausgewertet, um eine Lichtlaufzeit zu dem Messpunkt 22 des jeweils angetasteten Objekts in dem Erfassungsbereich 18 und daraus deren Abstand zu bestimmen. Es wird vorzugsweise mit einem pulsbasierten Verfahren gemessen (dToF, direct Time-of-Flight), aber eine Pulsmittelung mit mehreren nacheinander ausgesandten Einzelpulsen und statistischer gemeinsamer Auswertung beispielsweise nach Akkumulation in einem Histogramm oder ein Phasenverfahren (iToF, indirect Time-of-Flight) ist ebenso denkbar. Zumindest Teile der Steuer- und Auswertungseinheit 30 können mit dem Lichtsender 12 beziehungsweise dem Lichtempfänger 28 auf einem gemeinsamen Baustein integriert werden, etwa eine Mustererzeugung für die Abfolge der Ablenkung oder pixelbezogene Auswertungen beziehungsweise Vorverarbeitungsschritte.

Für eine genauere Lichtlaufzeitmessung wird zusätzlich zu dem eigentlichen Messpfad mit dem Messsignal aus dem remittierten Sendelichtstrahl 24 ein Referenzpfad zur Erzeugung eines Referenzsignals für eine optische Referenzmessung aufgespannt. Verschiedene optische und elektronische Laufzeitverzögerungen können die Messung verfälschen. Mögliche Ursachen sind Temperatureffekte und sonstige Umwelteinflüsse sowie Bauteilschwankungen, die sich in den verschiedenen Empfangskanälen unterschiedlich auswirken und während des Betriebes ändern können. Mit Hilfe des Referenzsignals können diese Verzögerungen kompensiert werden, indem beispielsweise von der Steuer- und Auswertungseinheit 30 aus dem Referenzsignal ein Startzeitpunkt der Lichtlaufzeitmessung bestimmt oder die Lichtlaufzeit korrigiert wird oder das Referenzsignal die Zeitmessung etwa mittels Time-to-Digital-Convertern (TDCs) startet. Soweit die Referenzmessung den gleichen Driften unterliegt wie die eigentliche Messung, und das ist durch geeignete Auslegung des Referenzpfads jedenfalls weitestgehend erreichbar, sind die Auswirkungen solcher Driften damit kompensierbar. Außerdem kann das Referenzsignal für ein Gating verwendet werden, bei dem Messsignale nur in einem Zeitfenster ab dem Referenzsignal gültig sind beziehungsweise die messenden Lichtempfangselemente nur in diesem Zeitfenster überhaupt aktiv sind oder ausgelesen werden. Ferner ist denkbar, aus dem Referenzsignal eine Signalform abzuleiten und diese im Messsignal wieder aufzufinden, um Messsignale und Störsignale voneinander zu unterscheiden.

Zur Erzeugung des Referenzsignals weist der Sensor 10 ein Referenzauskopplungselement 32 auf. Das Referenzauskopplungselement 32 ist hier beispielhaft an einer Frontscheibe 34 des Sensors 10 angeordnet, durch den der Sendelichtstrahl 16 aus- und der remittierte Sendelichtstrahl 24 eintritt. Das Referenzauskopplungselement 32 kann alternativ innen im Sendestrahlengang oder außen an der Frontscheibe 34 angeordnet werden oder in die Frontscheibe 34 integriert werden. Mögliche Anordnungen, Ausgestaltungen sowie die Funktion des Referenzauskopplungselements 32 werden später unter Bezugnahme auf die Figuren 2-10 genauer erläutert.

Vorläufig genügt für das Verständnis zu wissen, dass das Referenzauskopplungselement 32 aus dem Sendelichtstrahl 16 einen Referenzlichtstrahl 36 auskoppelt und auf einem Referenzpfad innerhalb des Sensor 10 auf den Lichtempfänger 28 zurückführt. Dabei trifft der Referenzlichtstrahl 36 für den jeweiligen Ablenkwinkel gezielt ein anderes Lichtempfangselement als dasjenige, in dessen Sichtfeld der Messpunkt 22 liegt. Somit fungiert in jedem Ablenkwinkel ein Lichtempfangselement als Messempfangselement zur Erzeugung des Messsignals zur Bestimmung der Lichtlaufzeit und ein anderes Lichtempfangselement als Referenzempfangselement zur Erzeugung des Referenzsignals zur Korrektur der Lichtlaufzeit. Sofern Lichtempfangselemente in Abhängigkeit vom aktuellen Ablenkwinkel aktiviert werden wie oben beschrieben, wird nicht nur das jeweilige Messempfangselement aktiviert, sondern auch das Referenzempfangselement. Die Lichtempfangselemente werden von der Steuer- und Auswertungseinheit 30 in wechselnden Rollen als Messempfangselement und Referenzempfangselement eingesetzt. Dedizierte Referenzpixel wie herkömmlich sind dadurch nicht notwendig. Dabei wird die in den meisten Fällen unkritische Annahme getroffen, dass sich die Messbedingungen innerhalb eines Scans nur in vernachlässigbarer Weise verändern. Das müsste aber bei dedizierten Referenzpixeln genauso unterstellt werden.

Der remittierte Sendelichtstrahl 24 und der Referenzlichtstrahl 36 können auf nur ein Pixel oder auf mehrere Pixel des Lichtempfängers 28 fallen. Demnach fungiert jeweils nicht zwingend nur genau ein Lichtempfangselement als Messempfangselement oder Referenzempfangselement, es können mehrere sein. Das gilt insbesondere für den Referenzpfad, der auf ein eng begrenztes Sichtfeld entsprechend dem Messpunkt 22 nicht angewiesen ist. Diese Differenzierung wird im Folgenden nicht mehr beachtet, ist aber mit umfasst, wenn sprachlich nur jeweils ein einziges Lichtempfangselement die Rolle des Messempfangselements oder Referenzempfangselements einnimmt.

Figur 2 zeigt eine schematische Darstellung der Erzeugung von individuell abgelenkten Referenzlichtstrahlen 36 durch das Referenzauskopplungselement 32. Das Referenzauskopplungselement 32 ist hier vereinfachend als eine Referenzebene gezeigt. Der Hauptteil des jeweiligen Sendelichtstrahls 16a-c passiert das Referenzauskopplungselement 32 und wird, wenn es auf ein Objekt 38 trifft, als remittierter Sendelichtstrahl 24a-c auf ein jeweiliges Lichtempfangselement 28a-c für den zugehörigen Ablenkwinkel zurückgeworfen. Ein Anteil wird jeweils als Referenzlichtstrahl 36a-c auf ein anderes Lichtempfangselement 28a-c umgeleitet.

Die Situation ist in Figur 2 beispielhaft für drei Ablenkwinkel und Lichtempfangselemente 28a-c gezeigt. In der Praxis werden üblicherweise sehr viel mehr Lichtempfangselemente eingesetzt, die den Erfassungsbereich 18 mit einem viel feineren Raster von Ablenkwinkeln abtasten. Dabei ist eine zeilenweise Abtastung mit nur einem Freiheitsgrad des Ablenkwinkels wie dargestellt oder alternativ eine flächige Abtastung mit zwei Freiheitsgraden des Ablenkwinkels möglich. Die gleichzeitig dargestellten Strahlwege sind tatsächlich nur nacheinander aktiv. Beispielsweise wird zunächst ein Sendelichtstrahl 16a nach links ausgesandt und der zugehörige remittierte Sendelichtstrahl 24a in dem linken Lichtempfangselement 28a empfangen. Ein dabei ausgekoppelter Referenzlichtstrahl 36a wird auf das mittlere Lichtempfangselement 28b umgeleitet, und dessen Empfangssignal wird als Referenzsignal für das Messsignal des linken Lichtempfangselements 28a genutzt.

Danach schwenkt die Ablenkeinheit 20 für den Sendelichtstrahl 16b in die Mitte. Nun fungiert das mittlere Lichtempfangselement 28b als Messempfangselement und das rechte Lichtempfangselement 28c als Referenzempfangselement. Im dritten Abtastschritt wird nach rechts mit dem Sendelichtstrahl 16c abgetastet, wobei das rechte Lichtempfangselement 28c das Messsignal und das linke Lichtempfangselement 28a das Referenzsignal liefert. Der Abtastvorgang wird dann zyklisch wiederholt.

Die gezeigte Reihenfolge ist rein beispielhaft. Die Bedingung an das Referenzlichtbündel 36a-c ist lediglich, dass es nicht auf dasjenige Lichtempfangselement 28a-c treffen darf, das in dem aktuellen Ablenkwinkel das Messsignal erzeugt. Außerdem sollte es zu jedem messenden Lichtempfangselement 28a-c ein referenzierendes Lichtempfangselement 28a-c geben. Dabei besteht für den Verlauf der Referenzpfade eine große Gestaltungsfreiheit. Sie können unter Beachtung der genannten Bedingung einander kreuzen, für mehrere Ablenkwinkel gleiche Lichtempfangselemente 28a-c sowie mehrere benachbarte oder nicht benachbarte Lichtempfangselemente 28a-c treffen und dergleichen mehr.

Vorzugsweise ist das Referenzauskopplungselement 32 in die Frontscheibe 34 integriert oder zumindest dort angeordnet. Es kann beispielsweise einzelne teildurchlässige Spiegel oder Scheiben oder eine Nanostrukturierung aufweisen. Auch über die Formgebung ist eine geeignete Strahlumlenkung der Referenzlichtstrahlen 36a-c erreichbar. Da die Lichtempfangselemente 28a-c typischerweise auch noch sehr kleine Signalpegel als Messsignal erfassen sollen und entsprechend sensitiv sind, genügt bereits die Auskopplung eines sehr kleinen Teils des Sendelichtstrahls 16a-c, um gut erfassbare Referenzlichtstrahlen 36a-c zu erzeugen.

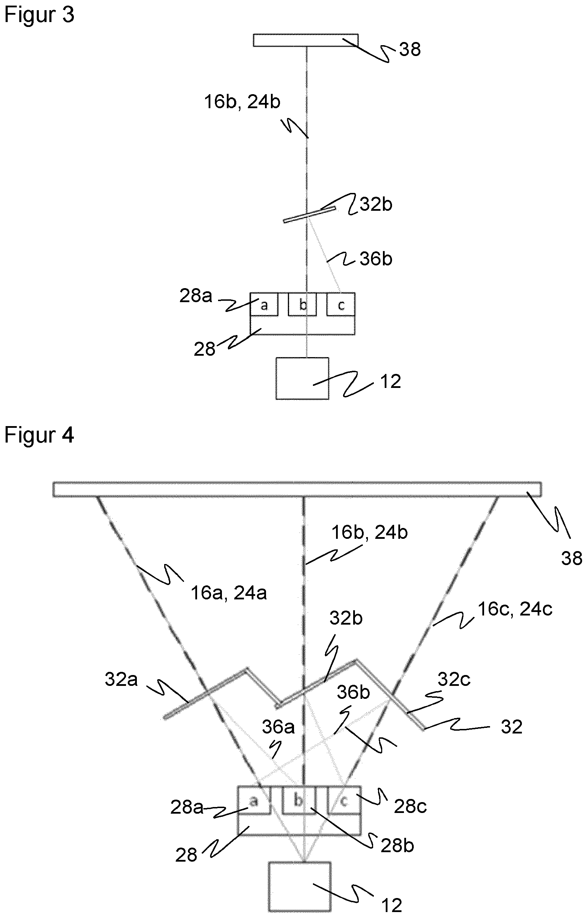

Figur 3 zeigt ausschnitthaft eine Darstellung der Erzeugung am Beispiel des Referenzlichtstrahls 36b für den mittleren Ablenkwinkel im Beispiel der Figur 2 mit nur drei Ablenkwinkeln. Das Referenzauskopplungselement 32 war in Figur 2 nur schematisch gezeigt, ohne in der Darstellung darauf einzugehen, wie damit eine individuelle Führung der Referenzlichtstrahlen 36a-c erreicht wird. Nun in Figur 3 ist ein schräg gestelltes Reflexionselement 32b als Teil des Referenzauskopplungselements 32 verwendet, beispielsweise eine einfache gekippte Glasscheibe, die zu der Frontscheibe 34 gehören kann. Ein Teil des austretenden Sendelichtstrahls 16b wird von dem Reflexionselement 32b nach rechts reflektiert. Dadurch trifft der remittierte Sendelichtstrahl 24b das mittlere Lichtempfangselement 28b, das als Messempfangselement fungiert, und der Referenzlichtstrahl 36b das rechte Lichtempfangselement 28c, das als Referenzempfangselement fungiert. Der remittierte Sendelichtstrahl 24b wird bei seiner Rückkehr ebenfalls teilweise von dem Reflexionselement 32b weggespiegelt und ist dann nicht mehr nutzbar. Dieses Verhalten kann durch eine Antireflexbeschichtung gemildert werden.

Figur 4 zeigt, wie durch mehrere Reflexionselemente 32a-c in variierender Schrägstellung statt nur eines einzelnen Referenzlichtstrahls 36b alle drei Referenzlichtstrahlen 32a-c auf ein passendes Lichtempfangselement 28a-c umgeleitet werden können. Die Schrägstellungen sind so wählbar, dass die Zuordnungen wie in Figur 2 entstehen, die nicht nochmals erläutert werden. Das Referenzauskopplungselement 32 ist beispielsweise eine mehrfach geknickte separate Scheibe oder Frontscheibe 34. Bei einer realistischen Anzahl von Lichtempfangselementen 28a-c entstehen viel kleinere Reflexionselemente 32a-c und eine entsprechend geringe Dicke des Referenzauskopplungselements 32. Figur 4 zeigt zwar eine denkbare reale erfindungsgemäße Ausführungsform, ist aber vor allem zur Verdeutlichung des Funktionsprinzips gedacht. Statt der etwas ungewöhnlichen Formgebung für eine Scheibe oder die Frontscheibe 34 sind Mikrospiegelstrukturen denkbar. Die einzelnen Spiegel können in ihrer Verkippung ansteuerbar sein, beispielsweise als MEMS-Spiegel, aber die Zuordnung der Referenzlichtstrahlen 36a-c kann die Referenzfunktion auch ohne dynamische Änderungen leisten.

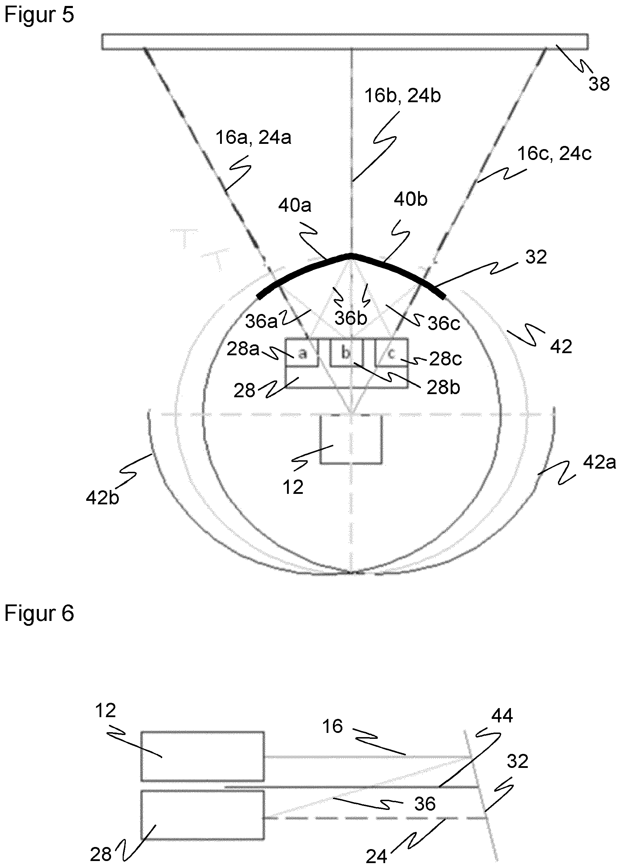

Figur 5 zeigt eine weitere erfindungsgemäße Ausführungsform eines Referenzauskopplungselements 32 zur Erzeugung von individuell abgelenkten Referenzlichtstrahlen 36a-c. In diesem Fall wird die Ablenkung nicht durch einzelne Strukturen oder Reflexionselemente erreicht, sondern durch eine geeignete geometrische Formgebung des Referenzauskopplungselements 32, das separat oder als Frontscheibe 34 vorgesehen sein kann. Diese Form ist in einer Draufsicht, also einem Schnitt des Referenzauskopplungselements 32, durch zwei ineinandergeschobene Kreisabschnitte 40a-b gegeben. Zur Veranschaulichung sind ein zentrierter einzelner Kreis 42 sowie die beiden erzeugenden versetzen Kreise 42a-b ebenfalls eingezeichnet. Das sind nur Hilfslinien, keine Elemente des Sensors 10. In der Mitte stoßen die beiden Kreisabschnitte 40a-b in einem Knick aufeinander. In der idealisierten Darstellung wird dann der ausgekoppelte Teil des Sendelichtstrahls 16b als zwei Referenzlichtstrahlen 36b zu beiden Seiten abgelenkt. Das muss in dieser Form in einem realen Sensor 10 nicht geschehen, würde aber immer noch funktionieren, da die von den Referenzlichtstrahlen 36b getroffenen, rechts und links benachbarten Lichtempfangselemente 28a;c andere sind als das für den mittleren Ablenkwinkel als Messempfangselement zuständige Lichtempfangselement 28b.

Figur 6 zeigt eine Seitenansicht zu Figur 5, die ebenso als Seitenansicht zu den Figuren 2 bis 4 aufgefasst werden kann. Lichtsender 12 und Lichtempfänger 28 liegen hier übereinander. Die zuvor gezeigten Anordnungen hintereinander sind in der Praxis möglich, dienten aber in erster Linie der entzerrten Darstellung. Ohnehin können Lichtsender 12 und Lichtempfänger 28 alternativ nebeneinander oder koaxial angeordnet sein, das Referenzauskopplungselement 32 ist dann entsprechend anzupassen.

Um den Höhenversatz auszugleichen, ist das Referenzauskopplungselement 32 verkippt, damit der Referenzlichtstrahl 36 den Lichtempfänger 28 in der Höhenrichtung trifft. Hat die Frontscheibe 34 eine Doppelfunktion als Referenzauskopplungselement 32, so ist sie zumindest im Bereich des Austritts des Sendelichtstrahls 16 verkippt, im Bereich des Wiedereintritts des remittierten Sendelichtstrahls 24 ist das möglich, aber nicht erforderlich. Ein optionales Filterelement 44 verhindert ein unerwünschtes Übersprechen von dem Sendepfad in den Empfangspfad.

In den Figuren 2-5 ist eine Scanbewegung oder Ablenkung nur mit einem Freiheitsgrad gezeigt, d.h. der Sendelichtstrahl 16 variiert in seiner Ausrichtung links nach rechts. Eine Ablenkeinheit 20 mit Variation des Ablenkwinkels in zwei Freiheitsgraden ist ebenso denkbar. Dann kann das Referenzauskopplungselement 32 auch für die hinzugekommene Elevations- oder Höhenrichtung Strukturen oder eine bestimmte Formgebung aufweisen. Da aber bereits innerhalb der beschriebenen Ebene eine Durchmischung von remittierten Sendelichtstrahlen 24 und Referenzlichtstrahlen 36 stattfindet, muss in Höhenrichtung nicht unbedingt mehr eine Variation hinzukommen. Der Verlauf in Höhenrichtung kann also einfach flach sein wie in Figur 6, womit dann das Referenzauskopplungselement 32 gemäß Figur 5 aus Zylinder- oder Kegelabschnitten zusammengesetzt ist.

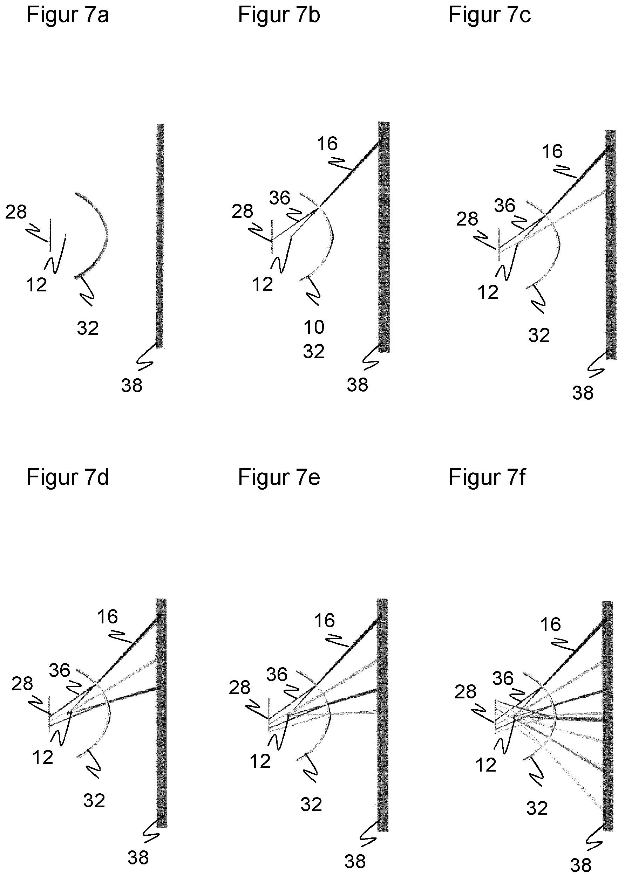

Die Figuren 7a-f illustrieren den simulierten Strahlenverlauf der Referenzlichtstrahlen 36 bei Verwendung eines zu Figur 5 vorgestellten Referenzauskopplungselements 32 aus zwei ineinandergeschobenen Kreisabschnitten 40a-b. Hier ist die Frontscheibe 34 selbst das Referenzauskopplungselement 32. Ein separates Referenzauskopplungselement 32 wäre auch denkbar, es entsteht dann aber ein zusätzlicher ungenutzter Frontscheibenreflex. Figur 7a zeigt die Ausgangssituation ohne Strahlengang, Figur 7b für einen Sendelichtstrahl 16 mit Ablenkwinkel 45°, Figur 7c für Sendelichtstrahlen 16 mit Ablenkwinkel 45° und 30°, Figur 7d für Sendelichtstrahlen 16 mit Ablenkwinkel 45°, 30° und 15°, Figur 7e für Sendelichtstrahlen 16 mit Ablenkwinkel 45°, 30°, 15° und 2° und Figur 7f für Sendelichtstrahlen 16 mit Ablenkwinkel ±45°, ±30°, ±15° und ±2°. Erkennbar trifft in jedem Ablenkwinkel der Referenzlichtstrahl 36 an einem geeignet versetzten Ort auf, wo ein Lichtempfangselement als Referenzempfangselement gewählt werden kann, das nicht mit dem Lichtempfangselement identisch ist, das für diesen Ablenkwinkel als Messempfangselement gebraucht wird.

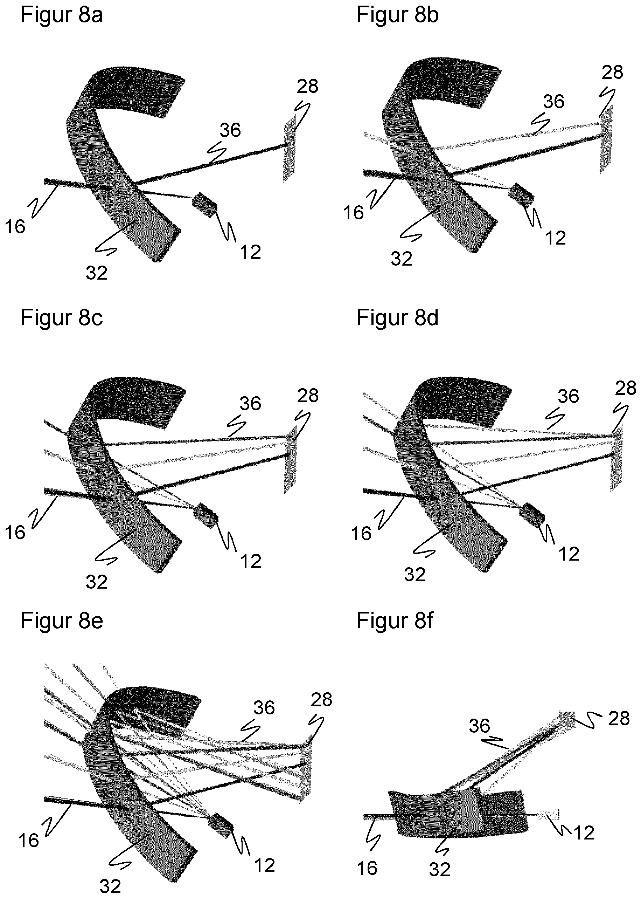

Die Figuren 8a-f illustrieren den Strahlverlauf nochmals nun in einer dreidimensionalen Ansicht von Simulationsergebnissen. Figur 8a zeigt die Situation für einen Sendelichtstrahl 16 mit Ablenkwinkel 45°, Figur 8b für Sendelichtstrahlen 16 mit Ablenkwinkel 45° und 30°, Figur 8c für Sendelichtstrahlen 16 mit Ablenkwinkel 45°, 30° und 15°, Figur 8d für Sendelichtstrahlen 16 mit Ablenkwinkel 45°, 30°, 15° und 2°, Figur 8e für Sendelichtstrahlen 16 mit Ablenkwinkel ±45°, ±30°, ±15° und ±2° und Figur 8f eine Seitenansicht zu Figur 8e.

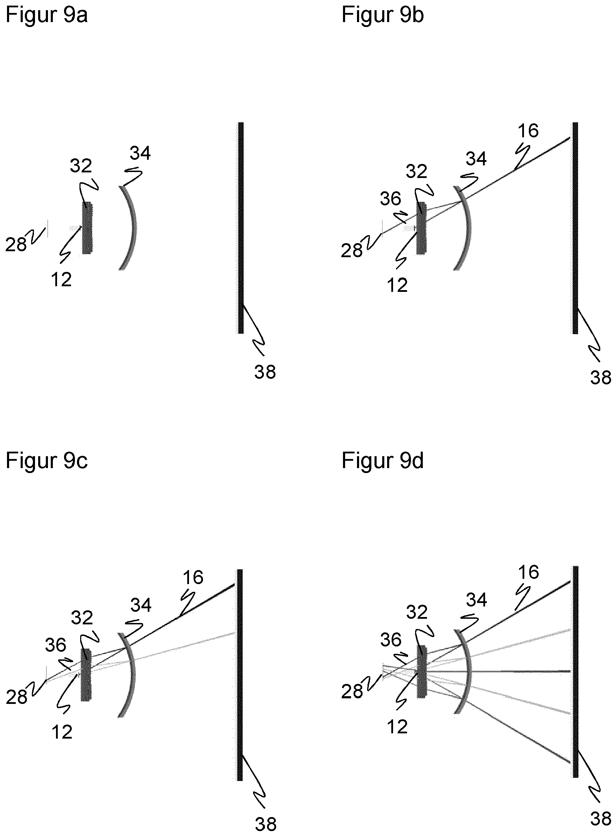

Die Figuren 9a-d f illustrieren den simulierten Strahlenverlauf der Referenzlichtstrahlen 36 nun in einer Ausführungsform mit Verwendung eines Referenzauskopplungselements 32 mit einer Vielzahl von Prismen, die nicht unter den Schutzumfang der Ansprüche fallen, oder erfindungsgemäßen Mikroprismen beziehungsweise einem Prismenarray, das ebenfalls nicht unter den Schutzumfang der Ansprüche fällt. Figur 9a zeigt die Ausgangssituation ohne Strahlengang, Figur 9b für einen Sendelichtstrahl 16 mit Ablenkwinkel 30°, Figur 9c für Sendelichtstrahlen 16 mit Ablenkwinkel 30° und 15° und Figur 9d für Sendelichtstrahlen 16 mit Ablenkwinkel ±30°, ±15° und 0°.

Das Referenzauskopplungselement 32 ist zusätzlich zu der Frontscheibe 34 als separates Bauteil vorgesehen. Alternativ können Mikroprismen an der Frontscheibe 34 angeordnet oder in die Frontscheibe 34 eingeprägt werden. Die Prismen lenken einen Frontscheibenreflex auf ein geeignetes Lichtempfangselement um, das für diesen Ablenkwinkel als Referenzempfangselement fungiert. Durch die Ausgestaltung der Prismen und deren Anordnung ist eine exakte Positionsvorgabe für das Auftreffen der Referenzlichtstrahlen 36 auf dem Lichtempfänger 28 möglich. Der Prismenanordnung ist vorzugsweise eine Blendenanordnung nachgeschaltet, die das Streulicht sehr gut dämpft und eine deutlich bessere Kanaltrennung ermöglicht. Eine solche Blendenanordnung im Empfangspfad ist im Übrigen auch in den anderen Ausführungsformen insbesondere mit einem Referenzauskopplungselement 32 aus zwei ineinandergeschobenen Kreisabschnitten 40a-b gemäß den Figuren 5 bis 8 von Vorteil. Der Lichtempfänger 12 kann auch ohne Luftspalt zu dem Referenzauskopplungselement 32 angeordnet sein, indem ein durchgehender Festkörper beispielsweise aus Glas oder Kunststoff mit geschliffenen Kanten verwendet wird. Ähnliches gilt für den Lichtempfänger 28.

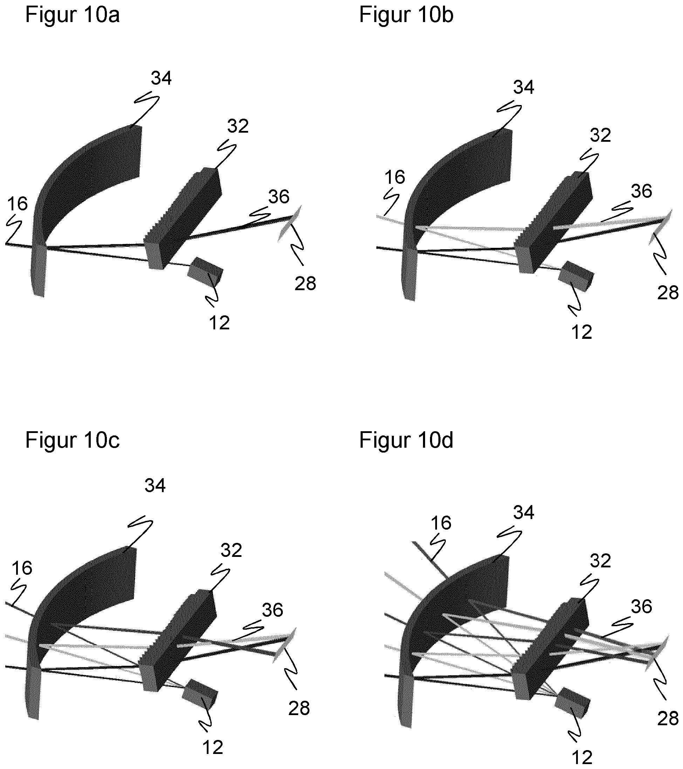

Die Figuren 10a-d illustrieren den Strahlverlauf nochmals nun in einer dreidimensionalen Ansicht von Simulationsergebnissen. Figur 10a zeigt die Situation für einen Sendelichtstrahl 16 mit Ablenkwinkel 30°, Figur 10b für Sendelichtstrahlen 16 mit Ablenkwinkel 30° und 15°, Figur 10c für Sendelichtstrahlen 16 mit Ablenkwinkel 30°, 15° und 0° und Figur 10d für Sendelichtstrahlen 16 mit Ablenkwinkel ±30°, ±15° und 0°. In der dreidimensionalen Ansicht ist zu erkennen, dass das Referenzauskopplungselement 32 in Höhenrichtung einen Platz findet, an dem es Referenzlichtstrahlen 36 auskoppeln kann, ohne in unerwünschter Weise auch die remittierten Sendelichtstrahlen 24 zu beeinflussen.

In allen vorgestellten Ausführungsformen kann das Referenzsignal für Zusatzfunktionen neben der Korrektur der Lichtlaufzeitmessung eingesetzt werden. Zum einen kann die gesamte Kette der Lichtlaufzeitmessung getestet werden, indem für das Referenzsignal eine Lichtlaufzeitberechnung durchgeführt und das Ergebnis mit einer Erwartung verglichen wird. Diese ist dann nicht um Driften bereinigt, testet aber den Messkanal und deckt mögliche Fehler auf. Dadurch wird ein Funktionsausfall erkannt, was insbesondere in sicherheitstechnischer Anwendung zur Erreichung eines höheren Sicherheitsniveaus erforderlich ist.

Wird ein erwarteter Referenzpegel eingelernt, so kann die Sendeleistung überwacht werden. Dadurch wird erkannt, wenn der Lichtsender 12 altert, zu starke Temperatureffekte zeigt, statt in einem Pulsbetrieb im Dauerbetrieb arbeitet und dergleichen. Auf diesem Wege wird auch bei Bedarf eine sogar lokalisierbare Verschmutzung der Frontscheibe 34 erkannt, die den Pegel des Referenzsignals durch stärkere Auskopplung erhöhen würde. Eine Erhöhung in allen Empfangskanälen deutet auf homogene Verschmutzung oder einen Fehler des Lichtsender 12 hin. Durch Vergleich des Referenzsignals mit einem erwarteten Referenzsignal lässt sich weiterhin erkennen, ob die Ablenkeinheit 20 fehlerfrei funktioniert. Bleibt das erwartete Referenzsignal aus, so strahlt der Lichtsender 12 in den falschen Ablenkwinkel, was nicht nur die Messung verhindert, sondern auch aus Gründen des Augenschutzes kritisch ist. Womöglich ist statt der Ablenkeinheit 20 der Lichtsender 12 ausgefallen, insbesondere, wenn in gar keinem Lichtempfangselement ein Empfangssignal mit einer kurzen Lichtlaufzeit entsprechend dem internen Referenzpfad erfasst wird. Der Sensor 10 ist jedenfalls so nicht einsatzfähig. Eine einfachere Überprüfung kommt ohne eingelernte Erwartungen an das Referenzsignal aus und stellt lediglich fest, ob überhaupt ein Referenzsignal entsteht, ohne dies mit einer Erwartungshaltung abzugleichen.

In einer weiteren Zusatzfunktion kann mit den Referenzsignalen der momentane Ablenkwinkel gemessen werden. Das ist wiederum eine Überprüfung der Ablenkeinheit 20 und kann genutzt werden, um sie nachzuregeln und bei bestehender Abweichung auf den gewünschten Ablenkwinkel auszurichten. Alternativ können die Messwerte in ihren Winkelkoordinaten nachgebessert werden. In jedem Ablenkwinkel messen ganz bestimmte Lichtempfangselemente das Referenzsignal, und die Zuordnung zu einem Messempfangselement ist bekannt, so dass auf den zugehörigen Ablenkwinkel zurückgeschlossen werden kann. Es ist sogar möglich, das Referenzsignal ohne Vorwissen über alle Lichtempfangselemente aufzufinden. Da der Sendelichtstrahl 16 nur in einen bestimmten Ablenkwinkel strahlt, bleiben die meisten Lichtempfangselemente bis auf einen Fremdlichtuntergrund dunkel. Es verbleiben mit höherem Pegel das Messsignal und das Referenzsignal, die anhand des Zeitverhaltens unterscheidbar sind, da der Referenzpfad kürzer ist als alle denkbaren Messpfade.

## Patentansprüche

1. Abstandsmessender optoelektronischer Sensor (10) zur Erfassung von Objekten (38) in einem Erfassungsbereich (18), der einen Lichtsender (12) zum Aussenden eines Sendelichtbündels (16), eine Ablenkeinheit (20) zum Ablenken des Sendelichtbündels (16) in verschiedene Ablenkwinkel zur Abtastung des Erfassungsbereichs (18), ein optisches Referenzauskopplungselement (32) im Strahlengang des abgelenkten Sendelichtbündels (16) zum Erzeugen eines Referenzlichtbündels (36), einen Lichtempfänger (28) mit mindestens einem ersten Lichtempfangselement (28a-c) und einem zweiten Lichtempfangselement (28a-c) zum Erzeugen eines Messsignals aus dem von den Objekten (38) remittierten Sendelichtbündel (24) und eines Referenzsignals aus dem intern in dem Sensor (10) von dem Sendelichtbündel (16) abgeleiteten Referenzlichtbündel (36) sowie eine Steuer- und Auswertungseinheit (30) aufweist, die dafür ausgebildet ist, das Messsignal und das Referenzsignal auszuwerten, um eine Lichtlaufzeit des ausgesandten und wieder empfangenen Sendelichtbündels (16, 24) zu bestimmen,
**dadurch gekennzeichnet,**
**dass** das Referenzauskopplungselement (32) mehrere Reflexionselemente in variierender Schrägstellung, eine Vielzahl von Mikrospiegeln oder Mikroprismen oder in einem Querschnitt die Form mindestens zweier zueinander verschobener Kreisabschnitte (40a-b) aufweist und dass mindestens ein Lichtempfangselement (28a-c) je nach Ablenkwinkel eine wechselnde Funktion als Messempfangselement zum Erzeugen des Messsignals und als Referenzempfangselement zum Erzeugen des Referenzsignals einnimmt, so dass jeweils ein Lichtempfangselement (28a-c) als Referenzempfangselement fungiert, das in diesem Ablenkwinkel nicht als Messempfangselement eingesetzt ist.

2. Sensor (10) nach Anspruch 1,
wobei die Steuer- und Auswertungseinheit (30) dafür ausgebildet ist, mit Hilfe der Ablenkeinheit (20) periodisch eine Zeile und/oder ein zweidimensionales Muster abzutasten.

3. Sensor (10) nach Anspruch 1 oder 2,
wobei die Ablenkung ohne Bewegung von mechanischen Teilen, allenfalls von mikromechanischen Teilen erfolgt, insbesondere die Ablenkeinheit (20) einen MEMS-Spiegel, ein schaltbares Flüssigkristallelement, ein Optical Phased Array, einen akusto-optischen Modulator, einen elektro-optischen Modulator oder eine kippbare Flüssiglinse aufweist.

4. Sensor (10) nach einem der vorhergehenden Ansprüche,
wobei der Lichtempfänger (28) eine Vielzahl von Lichtempfangselementen (28a-c) aufweist, insbesondere SPADs, die jeweils unterschiedlichen Ablenkwinkeln zugeordnet sind.

5. Sensor (10) nach einem der vorhergehenden Ansprüche,
wobei das mindestens eine Lichtempfangselement (28a-c), das als Messempfangselement fungiert, mit jedem Ablenkwinkel wechselt.

6. Sensor (10) nach einem der vorhergehenden Ansprüche,
wobei die Steuer- und Auswertungseinheit (30) dafür ausgebildet ist, jeweils nur diejenigen Lichtempfangselemente (28a-c) zu aktivieren oder auszulesen, die dem jeweiligen aktuellen Ablenkwinkel entsprechen.

7. Sensor (10) nach einem der vorhergehenden Ansprüche,
wobei das optische Referenzauskopplungselement (32) an einer Frontscheibe (34) des Sensors (10) angeordnet oder in die Frontscheibe (34) integriert ist.

8. Sensor (10) nach einem der vorhergehenden Ansprüche,
wobei das Referenzauskopplungselement (32) in einem Querschnitt die Form mindestens zweier ineinandergeschobener Kreisabschnitte (40a-b) aufweist.

9. Sensor (10) nach einem der vorhergehenden Ansprüche,
der eine empfangsseitige Blendenanordnung mit jeweils einer Blende pro Ablenkwinkel aufweist.

10. Sensor (10) nach einem der vorhergehenden Ansprüche,
wobei die Steuer- und Auswertungseinheit (30) dafür ausgebildet ist, aus dem Referenzsignal den Ablenkwinkel zu messen oder zu überprüfen.

11. Sensor (10) nach einem der vorhergehenden Ansprüche,
wobei die Steuer- und Auswertungseinheit (30) dafür ausgebildet ist, anhand des Referenzsignals die Funktionsfähigkeit der Ablenkeinheit (20), die Ausgangsleistung des Lichtsenders (12) und/oder eine Verschmutzung einer Frontscheibe (34) zu prüfen.

12. Verfahren zur optischen Abstandsmessung von Objekten (38) in einem Erfassungsbereich (18), bei dem ein Sendelichtbündel (16) ausgesandt und zur Abtastung des Erfassungsbereichs (18) in verschiedene Ablenkwinkel abgelenkt wird, wobei ein optisches Referenzauskopplungselement (32) im Strahlengang des abgelenkten Sendelichtbündels (16) ein Referenzlichtbündel (36) erzeugt und wobei mit mindestens einem ersten Lichtempfangselement (28a-c) und einem zweiten Lichtempfangselement (28a-c) ein Messsignal aus dem von den Objekten (38) remittierten Sendelichtbündel (24) und ein Referenzsignal aus dem von dem Sendelichtbündel (16) abgeleiteten Referenzlichtbündel (36) erzeugt und ausgewertet werden, um eine Lichtlaufzeit des ausgesandten und wieder empfangenen Sendelichtbündels (16, 24) zu bestimmen,
**dadurch gekennzeichnet,**
**dass** das Referenzauskopplungselement (32) mehrere Reflexionselemente in variierender Schrägstellung, eine Vielzahl von Mikrospiegeln oder Mikroprismen oder in einem Querschnitt die Form mindestens zweier zueinander verschobener Kreisabschnitte (40a-b) aufweist und dass mindestens ein Lichtempfangselement (28a-c) je nach Ablenkwinkel eine wechselnde Funktion als Messempfangselement zum Erzeugen des Messsignals und als Referenzempfangselement zum Erzeugen des Referenzsignals einnimmt, so dass jeweils ein Lichtempfangselement (28a-c) als Referenzempfangselement fungiert, das in diesem Ablenkwinkel nicht als Messempfangselement eingesetzt ist.

## Claims

1. A distance-measuring optoelectronic sensor (10) for detecting objects (38) in a detection area (18), comprising a light transmitter (12) for transmitting a transmitted light beam (16), a deflection unit (20) for deflecting the transmitted light beam (16) into different deflection angles for scanning the detection area (18), an optical reference decoupling element (32) in the beam path of the deflected transmitted light beam (16) for generating a reference light beam (36), a light receiver (28) having at least a first light receiving element (28a-c) and a second light receiving element (28a-c) for generating a measurement signal from the remitted transmitted light beam (24) remitted by the objects (38) and a reference signal from the reference light beam (36) derived internally in the sensor (10) from the transmitted light beam (16), and a control and evaluation unit (30) configured to evaluate the measurement signal and the reference signal in order to determine a light time of flight of the transmitted light beam (16, 24) that is transmitted and received again,
**characterized in that** the reference decoupling element (32) comprises a plurality of reflection elements in varying oblique positions, a plurality of micromirrors or microprisms or, in a cross section, the shape of at least two circular sections (40a-b) that are offset relative to one another, and **in that** at least one light-receiving element (28a-c) assumes, depending on the deflection angle, an alternating function as a measurement receiving element for generating the measurement signal and as a reference receiving element for generating the reference signal so that a respective light receiving element (28a-c) functions as a reference receiving element that is not used as a measuring receiving element at this deflection angle.

2. The sensor (10) according to claim 1,
wherein the control and evaluation unit (30) is configured to periodically scan a line and/or a two-dimensional pattern by means of the deflection unit (20).

3. The sensor (10) according to claim 1 or 2,
wherein the deflection takes place without movement of mechanical parts, at most of micromechanical parts, in particular the deflection unit (20) comprises a MEMS mirror, a switchable liquid crystal element, an optical phased array, an acousto-optical modulator, an electro-optical modulator or a tiltable liquid lens.

4. The sensor (10) according to any of the preceding claims,
wherein the light receiver (28) comprises a plurality of light receiving elements (28a-c), in particular SPADs, each associated with different deflection angles.

5. The sensor (10) according to any of the preceding claims,
wherein the at least one light receiving element (28a-c) acting as a measurement receiving element changes with each deflection angle.

6. The sensor (10) according to any of the preceding claims,
wherein the control and evaluation unit (30) is configured to activate or read out in each case only those light-receiving elements (28a-c) which correspond to the respective current deflection angle.

7. The sensor (10) according to any of the preceding claims,
wherein the optical reference decoupling element (32) is arranged on a front window (34) of the sensor (10) or integrated into the front window (34).

8. The sensor (10) according to any of the preceding claims,
wherein the reference decoupling element (32) has, in a cross-section, the shape of at least two circular sections (40a-b) inserted into each other.

9. The sensor (10) according to any of the preceding claims,
comprising an aperture arrangement on the receiving side with one aperture per deflection angle.

10. The sensor (10) according to any of the preceding claims,
wherein the control and evaluation unit (30) is configured to measure or check the deflection angle from the reference signal.

11. The sensor (10) according to any of the preceding claims,
wherein the control and evaluation unit (30) is configured to use the reference signal to check the operability of the deflection unit (20), the output power of the light transmitter (12) and/or a contamination of a front window (34).

12. A method for optical distance measurement of objects (38) in a detection area (18), wherein a transmitted light beam (16) is transmitted and deflected into different deflection angles for scanning the detection area (18), wherein an optical reference decoupling element (32) generates a reference light beam (36) in the beam path of the deflected transmitted light beam (16), and wherein, using at least a first light receiving element (28a-c) and a second light receiving element (28a-c), a measurement signal is generated from the remitted transmitted light beam (24) remitted by the objects (38) and a reference signal is generated from the reference light beam (36) derived from the transmitted light beam (16), the signals being evaluated in order to determine a light time of flight of the transmitted light beam (16, 24) that is transmitted and received again,
**characterized in that** the reference decoupling element (32) comprises a plurality of reflection elements in varying oblique positions, a plurality of micromirrors or microprisms or, in a cross section, the shape of at least two circular sections (40a-b) that are offset relative to one another, and **in that** at least one light-receiving element (28a-c) assumes, depending on the deflection angle, an alternating function as a measurement receiving element for generating the measurement signal and as a reference receiving element for generating the reference signal so that a respective light receiving element (28a-c) functions as a reference receiving element that is not used as a measuring receiving element at this deflection angle.

## Revendications

1. Capteur optoélectronique de mesure de distance (10) pour détecter des objets (38) dans une zone de détection (18), comprenant un émetteur de lumière (12) pour émettre un faisceau de lumière transmis (16), une unité de déviation (20) pour dévier le faisceau de lumière transmis (16) selon différents angles de déviation pour balayer la zone de détection (18), un élément de découplage de référence optique (32) dans le trajet du faisceau de lumière transmis dévié (16) pour générer un faisceau de lumière de référence (36), un récepteur de lumière (28) avec au moins un premier élément de réception de lumière (28a- c) et un deuxième élément de réception de lumière (28a- c) pour générer un signal de mesure à partir du faisceau de lumière transmis (24) renvoyé par les objets (38) et un signal de référence du faisceau de lumière de référence (36) dérivé de manière interne dans le capteur (10) à partir du faisceau de lumière transmis (16), et une unité de commande et d'évaluation (30) configurée pour évaluer le signal de mesure et le signal de référence afin de déterminer un temps de vol du faisceau de lumière transmis (16, 24) émis et reçu,
**caractérisé en ce que** l'élément de découplage de référence (32) comprend plusieurs éléments de réflexion dans une position oblique variable, une pluralité de micromiroirs ou de microprismes ou, dans une section transversale, la forme d'au moins deux sections circulaires (40a- b) décalées l'une par rapport à l'autre, et **en ce qu'**au moins un élément de réception de la lumière (28a- c) occupe, selon l'angle de déviation, une fonction alternée en tant qu'élément de réception de mesure pour générer le signal de mesure et en tant qu'élément de réception de référence pour générer le signal de référence, de sorte qu'un élément de réception de lumière (28a- c) agit à chaque fois comme élément de réception de référence qui n'est pas utilisé comme élément de réception de mesure dans cet angle de déviation.

2. Capteur (10) selon la revendication 1,
dans lequel l'unité de commande et d'évaluation (30) est configurée pour balayer périodiquement une ligne et/ou un motif bidimensionnel à l'aide de l'unité de déviation (20).

3. Capteur (10) selon la revendication 1 ou 2,
dans lequel la déviation s'effectue sans mouvement de pièces mécaniques, tout au plus de pièces micromécaniques, en particulier l'unité de déviation (20) comprend un miroir MEMS, un élément à cristaux liquides commutable, un réseau optique à commande de phase, un modulateur acousto-optique, un modulateur électro-optique ou une lentille liquide inclinable.

4. Capteur (10) selon l'une des revendications précédentes,
dans lequel le récepteur de lumière (28) comprend une pluralité d'éléments de réception de lumière (28a- c), en particulier des SPAD, chacun associé à des angles de déviation différents.

5. Capteur (10) selon l'une des revendications précédentes,
dans lequel au moins l'élément de réception de lumière (28a- c) agissant en tant qu'élément de réception de mesure change avec chaque angle de déviation.

6. Capteur (10) selon l'une des revendications précédentes,
dans lequel l'unité de commande et d'évaluation (30) est configurée pour activer ou lire à chaque fois uniquement les éléments de réception de lumière (28a- c) qui correspondent à l'angle de déviation actuel respectif.

7. Capteur (10) selon l'une des revendications précédentes,
dans lequel l'élément de découplage de référence optique (32) est disposé sur une face (34) du capteur (10) ou intégré dans la face (34).

8. Capteur (10) selon l'une des revendications précédentes,
dans lequel l'élément de découplage de référence (32) comprend, dans une section transversale, la forme d'au moins deux sections circulaires (40a- b) insérées l'une dans l'autre.

9. Capteur (10) selon l'une des revendications précédentes,
qui comprend un agencement de diaphragmes du côté de la réception avec un diaphragme par angle de déviation.

10. Capteur (10) selon l'une des revendications précédentes,
dans lequel l'unité de commande et d'évaluation (30) est configurée pour mesurer ou vérifier l'angle de déviation à partir du signal de référence.

11. Capteur (10) selon l'une des revendications précédentes,
dans lequel l'unité de commande et d'évaluation (30) est configurée pour vérifier à l'aide du signal de référence, la capacité de fonctionnement de l'unité de déviation (20), la puissance de sortie de l'émetteur de lumière (12) et/ou un encrassement d'une face (34).

12. Procédé de mesure optique de la distance d'objets (38) dans une zone de détection (18), dans lequel un faisceau de lumière transmis (16) est émis et dévié selon différents angles de déviation pour balayer la zone de détection (18), dans lequel un élément de découplage de référence optique (32) génère un faisceau de lumière de référence (36) dans le trajet du faisceau de lumière transmis dévié (16), et dans lequel, avec au moins un premier élément de réception de lumière (28a- c) et un deuxième élément de réception de lumière (28a- c), un signal de mesure est généré et évalué à partir du faisceau de lumière transmis (24) renvoyé par les objets (38) et un signal de référence est généré et évalué à partir du faisceau de lumière de référence (36) dérivé du faisceau de lumière transmis (16) afin de déterminer un temps de vol de la lumière du faisceau de lumière transmis (16, 24) émis et reçu,
**caractérisé en ce que** l'élément de découplage de référence (32) comprend plusieurs éléments de réflexion dans une position oblique variable, une pluralité de micromiroirs ou de microprismes ou, dans une section transversale, la forme d'au moins deux sections circulaires (40a- b) décalées l'une par rapport à l'autre, et **en ce qu'**au moins un élément de réception de la lumière (28a- c) occupe, selon l'angle de déviation, une fonction alternée en tant qu'élément de réception de mesure pour générer le signal de mesure et en tant qu'élément de réception de référence pour générer le signal de référence, de sorte qu'un élément de réception de lumière (28a- c) agit à chaque fois comme élément de réception de référence qui n'est pas utilisé comme élément de réception de mesure dans cet angle de déviation.
